# EUROPÄISCHE PATENTSCHRIFT

(11) **EP 4 046 237 B1**
(45) Veröffentlichungstag und Bekanntmachung des Hinweises auf die Patenterteilung: **03.12.2025**
(21) Anmeldenummer: 20792373.1
(22) Anmeldetag: 13.10.2020
(51) Int. Cl.: H01Q 1/28, H01Q 1/40, H01Q 15/08, H01Q 1/38

(54) **ANTENNENVORRICHTUNG FÜR EIN FAHRZEUG SOWIE FAHRZEUG MIT EINER ANTENNENVORRICHTUNG**
AERIAL DEVICE FOR A VEHICLE AND VEHICLE WITH AN AERIAL DEVICE
DISPOSITIF AÉRIEN POUR VÉHICULE ET VÉHICULE ÉQUIPÉ D'UN DISPOSITIF AÉRIEN

(30) Priorität: 14.10.2019 DE 102019215718
(43) Veröffentlichungstag der Anmeldung: 24.08.2022
(73) Patentinhaber: Airbus Defence and Space GmbH, 82024 Taufkirchen (DE)
(72) Erfinder: ZIEGLER, Volker, 82024 Taufkirchen (DE); WINKLER, Wolfgang, 15234 Frankfurt (DE)
(86) Internationale Anmeldenummer: PCT/EP2020/078759
(87) Internationale Veröffentlichungsnummer: WO 2021/074137

(56) Entgegenhaltungen:
- WO-A1-2004/088793
- WO-A1-98/54788
- DE-A1- 102011 076 501
- DE-T5- 112013 005 877
- US-A- 4 878 062
- US-A1- 2010 038 488

## Beschreibung

Die vorliegende Erfindung betrifft eine Antennenvorrichtung für ein Fahrzeug, insbesondere für ein Luftfahrzeug, sowie ein Fahrzeug, insbesondere ein Luftfahrzeug mit einer solchen Antennenvorrichtung.

Luftfahrzeuge und zunehmend auch andere Fahrzeuge oder mobile Plattformen wie Autos, LKW, Busse, Züge, Schiffe usw. weisen Radarsysteme und/oder mobile Kommunikationssysteme auf. Diese Systeme benötigen Antennen, die typischerweise an einer Außenhaut des Fahrzeugs montiert werden. Um die Antenne zu schützen und die aerodynamischen Auswirkungen der Antenne möglichst gering zu halten wird in der Regel eine Verkleidung verwendet, welche die Antenne über einem äußeren Oberflächenabschnitt der Außenhaut umschließt. Vor diesem Hintergrund beschreibt z.B. die US 7 967 253 B2 eine Abdeckung für eine Radarantenne eines Luftfahrzeugs, wobei die Abdeckung eine hinsichtlich aerodynamischer Eigenschaften optimierte Form aufweist.

Weitere aus dem Stand der Technik bekannte Abdeckungen sind in der WO 2004/088793 A1, der DE 11 2013 005877 T5, sowie der US 2010/038488 A1 beschrieben.

Es ist Aufgabe der vorliegenden Erfindung, verbesserte Lösungen für Antennen an mobilen Plattformen, insbesondere an Luftfahrzeugen, bereitzustellen.

Diese Aufgabe wird jeweils durch die Gegenstände der unabhängigen Ansprüche gelöst.

Gemäß der Erfindung ist eine Antennenvorrichtung für ein Fahrzeug vorgesehen, insbesondere für ein Luftfahrzeug wie z.B. ein Flugzeug oder eine unbemannte Drohne. Die erfindungsgemäße Antennenvorrichtung umfasst eine Antennenanordnung und eine Linse, welche einen die Antennenanordnung überdeckenden ersten Linsenbereich aus einem ersten Material mit einer ersten Dielektrizitätskonstante und einen den ersten Linsenbereich überdeckenden zweiten Linsenbereich aus einem zweiten Material mit einer zweiten Dielektrizitätskonstante aufweist. Die zweite Dielektrizitätskonstante ist kleiner als die erste Dielektrizitätskonstante. Weiterhin erstreckt sich der zweite Linsenbereich in einer Längsrichtung und in Bezug auf eine quer zur Längsrichtung gerichtete Hochrichtung bogenförmig.

Gemäß einem Aspekt der Erfindung ist ein Fahrzeug mit einer Außenhaut mit einer Außenfläche, welche eine Strömungsoberfläche bildet, und mit einer Antennenvorrichtung gemäß der Erfindung vorgesehen, welche mit der Außenhaut verbunden ist, wobei der zweite Linsenbereich der Linse über die Außenhaut vorsteht.

Eine der Erfindung zugrundeliegende Idee besteht darin, eine Antenne eines Radar- oder Kommunikationssystems zumindest teilweise in eine zwei oder mehrschichtige Linse einzukapseln, welche eine aerodynamisch vorteilhafte bogenförmige Gestalt bzw. die Gestalt einer schmalen, länglichen Kuppel aufweist. Die Linse weist ein erstes Linsenteil bzw. einen ersten Linsenbereich auf, welcher eine hohe Dielektrizitätskonstante und damit einen großen Brechungsindex aufweist und welcher zum Fokussieren eines von der Antenne emittierten elektromagnetischen Strahls dient, und ein zweites Linsenteil bzw. einen zweiten Linsenbereich, welcher eine kleine Dielektrizitätskonstante und damit einen kleinen Brechungsindex aufweist und welcher eine aerodynamisch optimierte Form aufweist. Das erste Linsenteil überdeckt die Antennenanordnung vollständig und kann z.B. eine in etwa kuppel- oder domförmige Gestalt aufweisen. Das zweite Linsenteil umschließt das erste Linsenteil zumindest teilweise, ist mit diesem vorzugsweise stoffschlüssig verbunden und weist eine längliche, bogenförmige Gestalt auf.

Bei dem erfindungsgemäßen Fahrzeug, welches z.B. ein Luftfahrzeug sein kann, wird die Antennenvorrichtung mit der Außenhaut des Fahrzeugs verbunden bzw. an dieser befestigt, wobei die Antennenvorrichtung so ausgerichtet wird, dass der zweite Linsenbereich entlang einer vorgesehenen Strömungsrichtung ausgerichtet ist, entlang welcher eine Fluidströmung vorzugsweise bzw. bei bestimmungsgemäßem Gebrauch des Fahrzeugs über die Außenhaut strömt.

Durch den zweischichtigen Linsenaufbau mit dem die Antennenanordnung überdeckenden ersten Linsenbereich zur Fokussierung der elektromagnetischen Strahlung und dem den ersten Linsenbereich überdeckenden zweiten Linsenbereich mit der bogenförmigen Gestaltung wird ein besonders kompakter und aerodynamisch vorteilhafter Aufbau der Antennenvorrichtung erzielt. Da der zweite Linsenbereich den ersten Linsenbereich überdeckt bzw. zumindest teilweise umschließt bzw. einkapselt, wird der verfügbare Platz optimal ausgenutzt. Ferner ist von Vorteil, dass auch der zweite Linsenbereich durch Vollmaterial gebildet ist, das heißt, das Material des zweiten Linsenbereich liegt an der Oberfläche der ersten Linsenbereichs an. Dadurch wird die mechanische Stabilität der Vorrichtung verbessert und der erste Linsenbereich ist noch besser vor äußeren Einflüssen geschützt.

Vorteilhafte Ausgestaltungen und Weiterbildungen ergeben sich aus den auf die unabhängigen Ansprüche rückbezogenen Unteransprüchen in Verbindung mit der Beschreibung.

Gemäß der Erfindung ist vorgesehen, dass die erste Dielektrizitätskonstante in einem Bereich zwischen 9 und 12 liegt und dass die zweite Dielektrizitätskonstante in einem Bereich zwischen 2,1 und 3 liegt. In diesem Bereich der ersten Dielektrizitätskonstante wird eine effiziente Fokussierung der elektromagnetischen Strahlung erzielt. Der erste Linsenbereich kann somit noch kompakter gestaltet werden und es wird eine präzise gerichtete Abstrahlung erzielt. Im Bereich zwischen 2,1 und 3 für die zweite Dielektrizitätskonstante wird der Einfluss des zweiten Linsenbereichs auf die Abstrahlung vorteilhaft gering gehalten. Optional kann der erste Linsenbereich aus Silizium oder Aluminiumnitrid, z.B. mit einer Dielektrizitätskonstante von 12, und der zweite Linsenbereich aus einem Plastik-Material gebildet sein.

Gemäß einer Ausführungsform können der erste Linsenbereich und der zweite Linsenbereich einstückig hergestellt sein, z.B. durch ein 3-D-Druckverfahren oder ein Spritzgussverfahren. Gemäß einem beispielhaften Herstellungsverfahren zur Herstellung der Antennenvorrichtung kann vorgesehen sein, dass der erste Linsenbereich aus dem ersten Material mittels eines additiven Herstellungsverfahrens, z.B. mittels eines FDM-Verfahrens, schichtweise auf der Antennenanordnung aufgebaut wird und der zweite Linsenbereich mittels des additiven Herstellungsverfahrens auf dem ersten Linsenbereich und um den ersten Linsenbereich herum schichtweise aufgebaut wird. Damit ergibt sich ein besonders effizientes Herstellungsverfahren. "FDM" steht hierbei als Abkürzung für den englischen Ausdruck "Fused Deposition Modeling" und bezeichnet ein 3D-Druckverfahren, bei welchem das herzustellende Bauteil schichtweise durch die Verflüssigung eines drahtförmigen, schmelzbaren Materials, Aufbringung des verflüssigten Materials durch Extrudieren mittels einer Düse sowie einem anschließenden Erstarren des Materials durch Abkühlung an der gewünschten Position aufgebaut wird. Durch die einstückige Gestaltung, wobei die Linsenbereiche stoffschlüssig miteinander verbunden sind, wird eine besonders gute mechanische Verbindung zwischen den Linsenbereichen erzielt. Insbesondere wird einem Eindringen von Feuchtigkeit, Schmutz oder dergleichen zwischen die Linsenbereiche vorgebeugt.

Gemäß einer weiteren Ausführungsform können der erste Linsenbereich und der zweite Linsenbereich miteinander verklebt sein. Auch auf diese Weise wird eine gute mechanische Verbindung zwischen den Linsenbereichen erzielt und einem Eindringen von Feuchtigkeit, Schmutz oder dergleichen zwischen die Linsenbereiche wird zuverlässig vorgebeugt.

Gemäß einer weiteren Ausführungsform kann vorgesehen sein, dass die Antennenanordnung auf einer Halbleitereinrichtung integriert ist, welche auf einer Trägerplatte befestigt ist. Insbesondere bei hohen Frequenzen kann ein sehr kompakter Aufbau der Antennenvorrichtung erzielt werden, indem die Antennenanordnung auf eine Halbleitereinrichtung, z.B. auf einen Halbleiterchip oder ein Gehäuse der Halbleitereinrichtung integriert wird, z.B. auf diesen bzw. dieses aufgedruckt ist. Die Halbleitereinrichtung kann auf einer Trägerplatte montiert werden, welche ihrerseits eine einfache Befestigungsstruktur zur Befestigung an der Außenhaut des Fahrzeugs und/oder eine elektrische Anschlussstruktur bereitstellt.

Gemäß einer weiteren Ausführungsform kann eine Radartransceiverschaltung auf die Halbleitereinrichtung integriert sein, z.B. auf den Halbleiterchip der Halbleitereinrichtung. Dies bietet insbesondere in hohen Frequenzbereichen, insbesondere bei Frequenzen im Bereich von 100 GHz oder höher den Vorteil eines besonders kompakten Aufbaus und hoher Leistungsfähigkeit.

Gemäß einer weiteren Ausführungsform kann die Antennenvorrichtung zusätzlich eine elektrische Anschlussschnittstelle aufweisen. Bei der Anschlussschnittstelle kann es sich beispielsweise um eine Anschlussklemme, eine Lötstelle oder um einen ähnlichen elektrischen Anschluss handeln.

Gemäß einer weiteren Ausführungsform ist die Antennenanordnung als Radarantenne ausgebildet. Dabei kann es sich auch um bildgebende Radar-Typen handeln, wie z.B. ein MIMO-Radar oder Phased-Array-Radar. Z.B. kann die Anschlussschnittstelle zur Verbindung der Antennenanordnung mit einem Radartransceiver ausgebildet sein. Alternativ kann die Radartransceiverschaltung, wie bereits erläutert, auf den Halbleiterchip der Halbleitereinrichtung integriert sein.

Gemäß einer weiteren Ausführungsform kann die Antennenanordnung zum Betrieb bei Frequenzen in einem Bereich zwischen 60 GHz und 300 GHz ausgelegt sein. In diesem Frequenzbereich lassen sich besonders kompakt aufgebaute Antennen realisieren, welche z.B. auf einen Halbleiterchip oder ein Gehäuse einer Halbleitereinrichtung integriert sind, wie oben beschrieben. Zum Beispiel kann die Antennenanordnung zum Betrieb bei Frequenzen im Frequenzband 122-123 GHz ausgelegt sein.

Gemäß einer Ausführungsform des Fahrzeugs kann vorgesehen sein, dass die Antennenvorrichtung, insbesondere die Trägerplatte der Antennenvorrichtung an der Außenfläche angeordnet ist. Dies bietet den Vorteil, dass lediglich eine kleine Durchführung an der Außenhaut zum Anschluss der Antennenvorrichtung vorgesehen werden kann.

Gemäß einer weiteren Ausführungsform des Fahrzeug kann vorgesehen sein, dass die Außenhaut eine Aufnahmeausnehmung aufweist, welche sich zwischen der Außenfläche und einer entgegengesetzt zu dieser gelegenen Innenfläche erstreckt, wobei der zweite Linsenbereich der Linse in der Aufnahmeausnehmung der Außenhaut angeordnet ist. Demnach kann die Antennenvorrichtung unterhalb der Außenhaut angeordnet sein und das zweite Linsenteil bzw. der zweite Linsenbereich füllt eine in der Außenhaut vorgesehene Ausnehmung. Damit wird der aerodynamische Einfluss der Antennenvorrichtung weiter verringert.

Gemäß einer weiteren Ausführungsform kann das Fahrzeug ein Luftfahrzeug, insbesondere ein Flugzeug oder eine unbemannte Drohne sein. Bei Luftfahrzeugen ist die Gestaltung der Antennenvorrichtung aufgrund der hohen Strömungsgeschwindigkeiten besonders vorteilhaft. Insbesondere kann vorgesehen sein, dass die Antennenvorrichtung mit der Längsrichtung entlang einer Rumpflängsrichtung des Luftfahrzeugs ausgerichtet ist.

In Bezug auf Richtungsangaben und Achsen, insbesondere auf Richtungsangaben und Achsen, die den Verlauf von physischen Strukturen betreffen, wird hierin unter einem Verlauf einer Achse, einer Richtung oder einer Struktur "entlang" einer anderen Achse, Richtung oder Struktur verstanden, dass diese, insbesondere die sich in einer jeweiligen Stelle der Strukturen ergebenden Tangenten jeweils in einem Winkel von kleiner 45 Grad, bevorzugt kleiner 30 Grad und insbesondere bevorzugt parallel zueinander verlaufen.

In Bezug auf Richtungsangaben und Achsen, insbesondere auf Richtungsangaben und Achsen, die den Verlauf von physischen Strukturen betreffen, wird hierin unter einem Verlauf einer Achse, einer Richtung oder einer Struktur "quer" zu einer anderen Achse, Richtung oder Struktur verstanden, dass diese, insbesondere die sich in einer jeweiligen Stelle der Strukturen ergebenden Tangenten jeweils in einem Winkel von größer oder gleich 45 Grad, bevorzugt größer oder gleich 60 Grad und insbesondere bevorzugt senkrecht zueinander verlaufen.

Hierin wird unter "einstückig", "einteilig", "integral" oder "in einem Stück" ausgebildeten Komponenten allgemein verstanden, dass diese Komponenten als ein einziges, eine Materialeinheit bildendes Teil vorliegen und insbesondere als ein solches hergestellt sind, wobei die eine von der anderen Komponente nicht ohne Aufhebung des Materialzusammenhalts von der anderen lösbar ist.

Im Folgenden wird die Erfindung unter Bezugnahme auf die Figuren der Zeichnungen erläutert. Von den Figuren zeigen:
- Fig. 1: eine schematische Schnittansicht einer Antennenvorrichtung gemäß einem Ausführungsbeispiel der vorliegenden Erfindung;
- Fig. 2: eine Schnittansicht der in Fig. 1 gezeigten Antennenvorrichtung, die sich bei einem Schnitt entlang der in Fig. 1 eingezeichneten Linie A-A ergibt;
- Fig. 3: eine Draufsicht auf die in Fig. 1 gezeigte Antennenvorrichtung;
- Fig. 4: eine schematische Draufsicht auf ein Fahrzeug gemäß einem Ausführungsbeispiel der vorliegenden Erfindung; und
- Fig. 5: eine schematische Schnittansicht einer Antennenvorrichtung gemäß einem weiteren Ausführungsbeispiel der vorliegenden Erfindung.

In den Figuren bezeichnen dieselben Bezugszeichen gleiche oder funktionsgleiche Komponenten, soweit nichts Gegenteiliges angegeben ist.

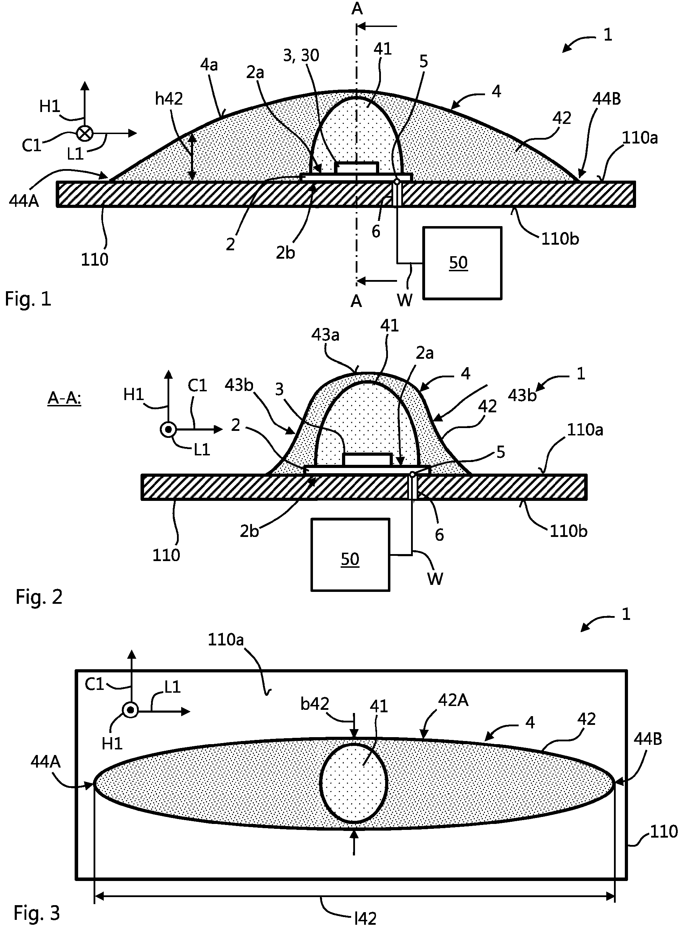

Fig. 1 zeigt schematisch eine Schnittansicht einer Antennenvorrichtung 1 bei einem Schnitt entlang einer Längsrichtung L1. Fig. 2 zeigt schematisch eine Schnittansicht der in Fig. 1 gezeigten Antennenvorrichtung 1 bei einem Schnitt entlang einer sich quer bzw. senkrecht zur Längsrichtung L1 erstreckenden Hochrichtung H1. Fig. 3 zeigt schematisch eine Draufsicht auf die in den Fign. 1 und 2 dargestellte Antennenvorrichtung 1.

Wie insbesondere in Fig. 1 erkennbar, weist die Antennenvorrichtung 1 eine optionale Trägerplatte 2, eine Antennenanordnung 3, ein Linse 4 und eine optionale Anschlussschnittstelle 5 auf. In den Fign. 1 bis 3 ist die Antennenvorrichtung 1 beispielhaft in einem Zustand dargestellt, in welchem diese an einer Außenhaut 110 eines Fahrzeugs 100 montiert ist.

Die optionale Trägerplatte 2 kann insbesondere eine Leiterplatte sein und ist vorzugsweise aus einem elektrisch isolierenden Kunststoffmaterial gebildet.

Die Antennenanordnung 3 ist in den Fign. 1 und 2 lediglich schematisch als ein Block dargestellt und kann eine Vielzahl von elektrisch leitenden Richtstrukturen wie Leiterbahnen oder dergleichen umfassen, die zur Abstrahlung elektromagnetischer Wellen eingerichtet sind. Die Richtstrukturen können beispielsweise in einer ebenen, flächigen Anordnung angeordnet sein. Wie in den Fign. 1 und 2 schematisch dargestellt, kann die Antennenanordnung 3 auf einer Halbleitereinrichtung 30 integriert sein, z.B. in Form von aufgedruckten oder in anderer Weise auf der Halbleitereinrichtung 30 hergestellten Leiterbahnen. Die Halbleitereinrichtung 30 ist in den Fign. 1 und 2 lediglich symbolisch als Block dargestellt. Die Halbleitereinrichtung 30 weist insbesondere einen Halbleiterchip und ein Gehäuse auf. Allgemein ist die Antennenanordnung 3 mit ihren Richtstrukturen in der Halbleitereinrichtung 30 integriert. Optional können zusätzlich auch Radartransceiverschaltungen in der Halbleitereinrichtung 30 integriert sein. Zum Beispiel können auf dem Chip der Halbleitereinrichtung 30 sowohl die Antennenanordnung 3 als auch die optionalen Radartransceiverschaltungen ausgebildet sein. Auch ist denkbar, dass der Chip Radartransceiverschaltungen enthält und die Antennenanordnung 30 an dem Gehäuse der Halbleitereinrichtung 30 ausgebildet ist. Alternativ kann die Antennenanordnung 3 auch direkt auf der Leiterplatte 2 vorgesehen und über kurze Verbindungen elektrisch mit dem Chip verbunden sein, welcher die Radartransceiverschaltungen enthält.

Die Halbleitereinrichtung 30 kann insbesondere auf der Trägerplatte 2 befestigt sein, z.B. mit dieser verklebt oder verlötet sein. Die Integration der Antennenanordnung 3 mit der Halbleitereinrichtung 30 bietet sich insbesondere für hohe Frequenzen an, z.B. für Frequenzen im Bereich zwischen 60 GHz und 300 GHz. Allgemein kann die Antennenanordnung 3 zum Betrieb bei Frequenzen in einem Bereich zwischen 60 GHz und 300 GHz ausgelegt sein.

Die optionale Anschlussschnittstelle 5 ist in den Fign. 1 und 2 ebenfalls lediglich symbolisch als ein Kreis dargestellt und kann z.B. an der Trägerplatte 2 oder an der Halbleitereinrichtung 30 ausgebildet sein. Beispielsweise kann die Anschlussschnittstelle 5 als eine Anschlussklemme oder als eine Lötstelle realisiert sein. Allgemein ist die Anschlussschnittstelle 5 als elektrischer Anschluss ausgebildet und dazu eingerichtet, eine elektrische Verbindung zu der Antennenanordnung 5 bereitzustellen. In den Fign. 1 und 2 ist schematisch und rein beispielhaft ein Radartransceiver 50 dargestellt, welcher zur Erzeugung von Radarwellen eingerichtet und mit der Anschlussschnittstelle 5 elektrisch verbunden ist. Der Transceiver 50 kann Teil des Fahrzeugs 100 sein oder mit der Antennenvorrichtung 1 ein Radarsystem bilden. Wie dies oben bereits erläutert wurde, kann der Transceiver 50 auch als Schaltung auf den Chip der Halbleitreinrichtung 30 integriert sein.

Wie in den Fign. 1 bis 3 erkennbar ist, weist die Linse 4 einen ersten Linsenbereich 41 und einen zweiten Linsenbereich 42 auf. Der erste Linsenbereich 4 kann insbesondere eine kuppelförmige oder domförmige Gestalt aufweisen, wie dies in den Fign. 1 und 2 beispielhaft dargestellt ist. Der erste Linsenbereich 41 überdeckt die Antennenanordnung 3 vollständig und kann insbesondere auf einer ersten Oberfläche 2a der Trägerplatte 2 angeordnet und optional mit dieser verklebt sein, wie dies in den Fign. 1 und 2 beispielhaft dargestellt ist. Wie in den Fign. 1 und 2 erkennbar ist, ist die Antennenanordnung 3 somit durch das Material des ersten Linsenbereichs 41 sowie durch die Trägerplatte 2 eingekapselt. Auch ist denkbar, dass die Antennenanordnung 3 vollständig durch das Material des ersten Linsenbereichs 41 eingekapselt ist. Somit ist die Antennenanordnung 3 zumindest durch das Material des ersten Linsenbereichs 41 eingekapselt.

Der erste Linsenbereich 41 dient zur Fokussierung der durch die Antennenanordnung 3 abstrahlbaren elektromagnetischen Strahlung und ist aus einem ersten Material gebildet, welches eine erste Dielektrizitätskonstante, z.B. in einem Bereich zwischen 9 und 12 aufweist. Damit weist der erste Linsenbereich 41 einen hohen Brechungsindex auf. Beispielsweise kann das erste Material ein Kunststoffmaterial, insbesondere auf ABS (Acrylnitril-Butadien-Styrol) - Basis sein. Weiterhin kommt als erstes Material z.B. Silizium oder Aluminiumnitrid in Frage.

Wie in den Fign. 1 und 3 erkennbar ist, erstreckt sich der zweite Linsenbereich 42 entlang der Längsrichtung L1. Wie in Fig. 3 schematisch dargestellt ist, kann ein Basisumfang 42A des zweiten Linsenbereichs 42 in etwa linsenförmig bzw. oval gestaltet sein. Selbstverständlich sind auch andere Gestaltungen denkbar, z.B. eine Tropfenform. In Bezug auf die Hochrichtung H1 weist der zweite Linsenbereich 42 einen bogenförmigen Verlauf auf, wie dies in Fig. 1 beispielhaft dargestellt ist. Hierbei variiert die Höhe h42 des zweiten Linsenbereichs 42 entlang der Längsrichtung L1, wobei die Höhe h42 zwischen einem in Bezug auf die Längsrichtung L1 vorderen Ende 44A und einem in Bezug auf die Längsrichtung L1 hinteren Ende 44B des zweiten Linsenbereichs 42 genau ein Maximum aufweist, wie dies in Fig. 1 schematisch dargestellt ist. Wie in Fig. 2 erkennbar ist, kann der zweite Linsenbereich 42 in Bezug auf eine Querrichtung C1, welche sich quer bzw. senkrecht zur Hochrichtung H1 und zur Längsrichtung L1 erstreckt, eine Querschnittsform aufweisen, die sich anschaulich als Glockenkurve beschreiben lässt. Wie in Fig. 2 beispielhaft dargestellt, kann der zweite Linsenbereich 42 in Bezug auf die Querrichtung C1 einen eine maximale Höhe definierenden, konvex gekrümmten oberen Oberflächenbereich 43a und zwei in Bezug auf die Querrichtung C1 entgegengesetzt zueinander gelegene seitliche Oberflächenbereiche 43b aufweisen, die sich von dem oberen Oberflächenbereich 43a aus erstrecken und konkav gekrümmt sind. Selbstverständlich sind auch andere, längliche bogenförmige Gestaltungen des zweiten Linsenabschnitts 42 denkbar, wobei der zweite Linsenabschnitt 42 in Bezug auf die Längsrichtung L1 eine Länge l42 aufweist, die größer ist als eine maximale Breite b42 des zweiten Linsenabschnitts 42 in Bezug auf die Querrichtung. Beispielsweise kann vorgesehen sein, dass die maximale Breite b42 zumindest 5 Prozent und maximal 50 Prozent der Länge l42 beträgt.

Wie insbesondere in den Fign. 1 und 2 erkennbar ist, überdeckt der zweite Linsenbereich 42 den ersten Linsenbereich 41 vollständig. Insbesondere kann der erste Linsenbereich 41, wie dies in den Fign. 1 und 2 beispielhaft dargestellt ist, vollständig innerhalb des Querschnitts des zweiten Linsenbereichs 42 liegen. Ferner liegt das Material des zweiten Linsenbereichs 42 am Material des ersten Linsenbereichs 41 an und ist mit diesem vorzugsweise stoffschlüssig verbunden, z.B. verklebt oder der erste und der zweite Linsenbereich 41, 42 sind einstückig miteinander hergestellt. Zur einstückigen Herstellung kann insbesondere ein 3D-Druckverfahren verwendet werden, wie beispielsweise ein FDM Verfahren.

Der zweite Linsenbereich 42 dient zum mechanischen Schutz des ersten Linsenbereichs 41 und zur Ausbildung einer aerodynamisch günstigen Form bzw. Oberfläche 4a der Linse 4. Der zweite Linsenbereich 42 ist aus einem zweiten Material gebildet, welches eine zweite Dielektrizitätskonstante, z.B. in einem Bereich zwischen 2,1 und 3 aufweist. Damit weist der zweite Linsenbereich 42 einen niedrigen Brechungsindex auf. Allgemein ist die zweite Dielektrizitätskonstante kleiner als die erste Dielektrizitätskonstante. Beispielsweise kann das erste Material ein Kunststoffmaterial, insbesondere auf ABS (Acrylnitril-Butadien-Styrol) - Basis sein.

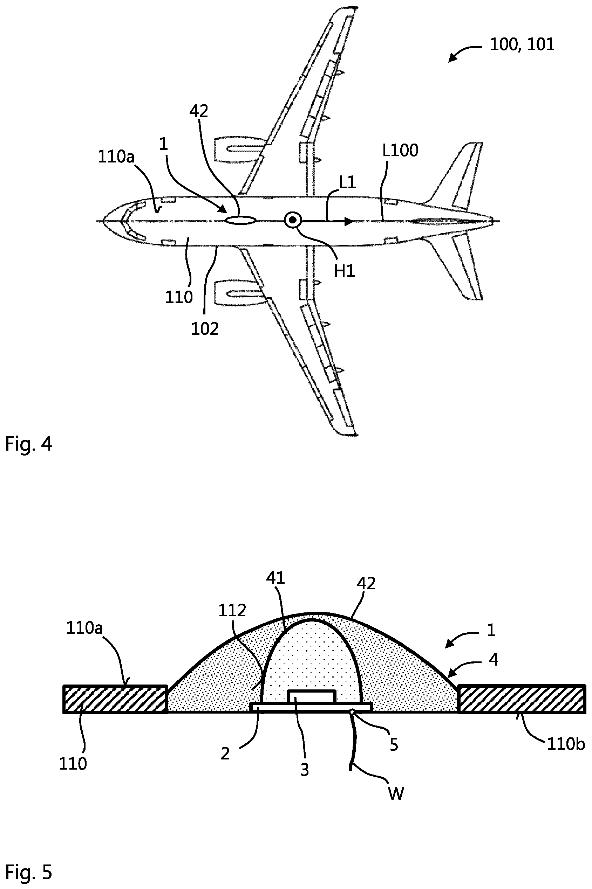

Wie bereits erwähnt, ist die Antennenvorrichtung 1 in den Fign. 1 bis 3 beispielhaft an einer Außenhaut 110 eines Fahrzeugs 100 angeordnet dargestellt. Das Fahrzeug 100 kann insbesondere ein Luftfahrzeugs 101 sein, beispielsweise in Flugzeug, wie dies in Fig. 4 dargestellt ist. Selbstverständlich kann die Antennenvorrichtung 1 auch bei anderen Fahrzeugen 100, wie z.B. Straßenfahrzeugen, Schienenfahrzeugen oder Schiffen zum Einsatz kommen.

Die Außenhaut 110 des Fahrzeugs 100 bildet mit deren Außenfläche 110a allgemein ein Oberfläche des Fahrzeugs 100, welche zur Umströmung mit einem Fluid, z.B. Luft, vorgesehen ist. Die Außenhaut 110 weist ferner eine Innenfläche 110b auf, welche entgegengesetzt zu der Außenfläche 110a orientiert ist und eine Innenseite der Außenhaut 110 definiert. Die Antennenvorrichtung 1 ist allgemein mit der Außenhaut 110 verbunden, wobei der zweite Linsenbereich 42 der Linse 4 über die Außenhaut 110 bzw. die Außenfläche 110a der Außenhaut 110 vorsteht. Bei dem in Fig. 4 beispielhaft dargestellten Luftfahrzeug 101 ist die Antennenvorrichtung 1 lediglich schematisch dargestellt. Wie in Fig. 4 erkennbar ist, kann vorgesehen sein, dass die Antennenvorrichtung 1 an einer Außenhaut 110 eines sich in einer Rumpflängsrichtung bzw. Rumpflängsachse L100 erstreckenden Rumpfs 102 des Luftfahrzeugs 101 angeordnet ist. Hierbei kann insbesondere vorgesehen sein, dass sich der zweite Linsenbereich 42 mit der Längsrichtung L1 entlang der Rumpflängsachse L100 erstreckt.

In den Fign. 1 und 2 ist beispielhaft eine mögliche Anordnung bzw. Anbringung der Antennenvorrichtung 1 an der Außenhaut 110 des Fahrzeugs 100 dargestellt. Wie in den Fign. 1 und 2 erkennbar, kann die Antennenvorrichtung 1 an der Außenfläche 110a der Außenhaut 110 angeordnet sein. Insbesondere kann die optionale Trägerplatte 2 an der Außenfläche 110a der Außenhaut 110 angeordnet sein, wobei eine entgegengesetzt zu der ersten Oberfläche 2a gelegene zweite Oberfläche 2b der Außenfläche 110a zugewandt gelegen ist und mit dieser verbunden sein kann, z.B. durch Verkleben, Verschrauben, Vernieten oder in ähnlicher Weise. Allgemein kann die Antennenanordnung 3 auf einer durch die Außenfläche 110a definierten Außenseite der Außenhaut 110 angeordnet sein. Der zweite Linsenbereich 42 kann insbesondere an der Außenfläche 110a der Außenhaut 110 anliegen, wie dies in den Fign. 1 und 2 beispielhaft dargestellt ist. Optional ist ferner eine Durchführung 6 vorgesehen, welche sich als Öffnung zwischen der Außenfläche 110a und der Innenfläche 110b erstreckt. Diese Durchführung 6 dient zur Aufnahme elektrischer Leitungen W, welche z.B. mit der Anschlussschnittstelle 5 der Antennenvorrichtung 1 verbindbar sind.

In Fig. 5 ist eine weitere mögliche Anordnung der Antennenvorrichtung 1 an der Außenhaut 110 dargestellt. Wie in Fig. 5 kann die Außenhaut 110 eine flächige Aufnahmeausnehmung 112 aufweisen, welche sich zwischen der Außenfläche 110a und der Innenfläche 110b erstreckt. Der Innenumfang dieser Aufnahmeausnehmung 112 kann im Wesentlichen korrespondierend zu einer Außenfläche des zweiten Linsenbereichs 42 gestaltet sein. Wie in Fig. 5 schematisch dargestellt, wird die Antennenvorrichtung 1 relativ zu der Aufnahmeausnehmung 112 derart positioniert bzw. angeordnet, dass der zweite Linsenbereich 42 der Linse 4 in der Aufnahmeausnehmung 112 der Außenhaut 110 angeordnet ist. Insbesondere kann vorgesehen sein, dass der zweite Linsenbereich 42 die Aufnahmeausnehmung 112 vollständig abdeckt bzw. verschließt. In Fig. 5 ist rein beispielhaft dargestellt, dass die Trägerplatte 2 in etwa bündig mit der Innenfläche 110b der Außenhaut 110 angeordnet ist. Grundsätzlich kann die Trägerplatte 2 oder allgemein die Antennenanordnung 3 auch auf der durch die Innenfläche 110b definierten Innenseite der Außenhaut 110 angeordnet sein.

Obwohl die vorliegende Erfindung vorstehend anhand von Ausführungsbeispielen exemplarisch erläutert wurde, ist sie darauf nicht beschränkt, sondern auf vielfältige Weise modifizierbar. Insbesondere sind auch Kombinationen der voranstehenden Ausführungsbeispiele denkbar.

### BEZUGSZEICHENLISTE

- 1: Antennenvorrichtung
- 2: Trägerplatte
- 2a: erste Oberfläche der Trägerplatte
- 3: Antennenanordnung
- 4: Linse
- 4a: Oberfläche der Linse
- 5: Anschlussschnittstelle
- 6: Durchführung

- 30: Halbleitereinrichtung
- 41: erster Linsenbereich
- 42: zweiter Linsenbereich
- 42A: Basisumfang des zweiten Linsenbereichs
- 43a: obere Oberfläche
- 43b: seitliche Oberflächen
- 44A: vorderes Ende des zweiten Linsenbereichs
- 44B: hinteres Ende des zweiten Linsenbereichs
- 50: Radartransceiver

- 100: Fahrzeug
- 101: Luftfahrzeug
- 102: Rumpf
- 110: Außenhaut
- 110a: Außenfläche
- 110b: Innenfläche
- 112: Aufnahmeausnehmung

- C1: Querrichtung
- L1: Längsrichtung
- L100: Rumpflängsachse
- H1: Hochrichtung
- h42: Höhe des zweiten Linsenbereichs
- W: elektrische Leitungen

## Patentansprüche

1. Antennenvorrichtung (1) für ein Fahrzeug (100), insbesondere für ein Luftfahrzeug (101), mit:
einer Antennenanordnung (3); und
einer Linse (4), welche einen die Antennenanordnung (3) überdeckenden ersten Linsenbereich (41) aus einem ersten Material mit einer ersten Dielektrizitätskonstante und einen den ersten Linsenbereich (41) überdeckenden zweiten Linsenbereich (42) aus einem zweiten Material mit einer zweiten Dielektrizitätskonstante aufweist;
wobei die erste Dielektrizitätskonstante in einem Bereich zwischen 9 und 12 liegt, um einen von der Antenne emittierten elektromagnetischen Strahl zu fokussieren, und die zweite Dielektrizitätskonstante in einem Bereich zwischen 2,1 und 3 liegt; und
wobei sich der zweite Linsenbereich (42) in einer Längsrichtung (L1) und in Bezug auf eine quer zur Längsrichtung (L1) gerichtete Hochrichtung (H1) bogenförmig erstreckt und wobei der zweite Linsenabschnitt (42) in Bezug auf die Längsrichtung (L1) eine Länge (l42) aufweist, die größer ist als eine maximale Breite (b42) des zweiten Linsenabschnitts (42) in Bezug auf eine sich quer zur Längsrichtung (L1) und zur Hochrichtung (H1) erstreckende Querrichtung (C1).

2. Antennenvorrichtung (1) nach Anspruch 1,wobei die maximale Breite (b42) des zweiten Linsenabschnitts (42) zumindest 5 Prozent und maximal 50 Prozent der Länge (l42) des zweiten Linsenabschnitts (42) beträgt.

3. Antennenvorrichtung (1) nach Anspruch 1 oder 2, wobei der erste Linsenbereich (41) und der zweite Linsenbereich (42) einstückig hergestellt sind.

4. Antennenvorrichtung (1) nach Anspruch 1 oder 2, wobei der erste Linsenbereich (41) und der zweite Linsenbereich (42) miteinander verklebt sind.

5. Antennenvorrichtung (1) nach einem der voranstehenden Ansprüche, wobei die Antennenanordnung (3) auf einer Halbleitereinrichtung (30) integriert ist, welche auf einer Trägerplatte (2) befestigt ist.

6. Antennenvorrichtung (1) nach Anspruch 5, wobei eine Radartransceiverschaltung auf die Halbleitereinrichtung (30) integriert ist.

7. Antennenvorrichtung (1) nach einem der voranstehenden Ansprüche, zusätzlich aufweisend eine elektrische Anschlussschnittstelle (5).

8. Antennenvorrichtung (1) nach einem der voranstehenden Ansprüche, wobei die Antennenanordnung (3) zum Betrieb bei Frequenzen in einem Bereich zwischen 60 GHz und 300 GHz ausgelegt ist.

9. Fahrzeug (100), mit:
einer Außenhaut (110) mit einer Außenfläche (110a), welche eine Strömungsoberfläche bildet; und
einer Antennenvorrichtung (1) nach einem der voranstehenden Ansprüche, welche mit der Außenhaut (110) verbunden ist, wobei der zweite Linsenbereich (42) der Linse (4) über die Außenhaut (110) vorsteht.

10. Fahrzeug (100) nach Anspruch 9, wobei die Antennenvorrichtung (1) an der Außenfläche (110a) angeordnet ist.

11. Fahrzeug nach Anspruch 9, wobei die Außenhaut (110) eine Aufnahmeausnehmung (112) aufweist, welche sich zwischen der Außenfläche (110a) und einer entgegengesetzt zu dieser gelegenen Innenfläche (110b) erstreckt, wobei der zweite Linsenbereich (42) der Linse (4) in der Aufnahmeausnehmung (112) der Außenhaut (110) angeordnet ist.

12. Fahrzeug (100) nach einem der Ansprüche 9 bis 11, wobei das Fahrzeug (100) ein Luftfahrzeug (101) ist.

## Claims

1. Antenna device (1) for a vehicle (100), particularly for an aircraft (101), comprising:
an antenna arrangement (3); and
a lens (4), which has a first lens area (41) made of a first material with a first dielectric constant, which covers the antenna arrangement (3), and a second lens area (42) made of a second material with a second dielectric constant, which covers the first lens area (41);
the first dielectric constant is in a range between 9 and 12 to focus an electromagnetic beam emitted by the antenna, and the second dielectric constant is in a range between 2.1 and 3; and
the second lens area (42) extends in an arc shape in a longitudinal direction (L1) and with respect to a vertical direction (H1) that is transverse to the longitudinal direction (L1), and the second lens section (42) has a length (142) in the longitudinal direction (L1) that is greater than a maximum width (b42) of the second lens section (42) in a transverse direction (C1) that extends transversely to the longitudinal direction (L1) and to the vertical direction (H1).

2. Antenna device (1) according to claim 1, wherein the maximum width (b42) of the second lens section (42) is at least 5 percent and at most 50 percent of the length (142) of the second lens section (42).

3. Antenna device (1) according to claim 1 or 2, wherein the first lens area (41) and the second lens area (42) are produced in one piece.

4. Antenna device (1) according to claim 1 or 2, wherein the first lens area (41) and the second lens area (42) are glued together.

5. Antenna device (1) according to any of the preceding claims, wherein the antenna arrangement (3) is integrated on a semiconductor device (30), which is mounted on a carrier plate (2).

6. Antenna device (1) according to claim 5, wherein a radar transceiver circuit is integrated on the semiconductor device (30).

7. Antenna device (1) according to any of the preceding claims, additionally comprising an electrical connection interface (5).

8. Antenna device (1) according to any of the preceding claims, wherein the antenna arrangement (3) is designed for operation at frequencies in a range between 60 GHz and 300 GHz.

9. Vehicle (100), comprising:
an outer skin (110) with an outer surface (110a), which forms a flow surface; and
an antenna device (1) according to any of the preceding claims, which is connected to the outer skin (110), wherein the second lens area (42) of the lens (4) protrudes over the outer skin (110).

10. Vehicle (100) according to claim 9, wherein the antenna device (1) is arranged on the outer surface (110a).

11. Vehicle according to claim 9, wherein the outer skin (110) has a mounting recess (112) that extends between the outer surface (110a) and an inner surface (110b) located opposite to it, wherein the second lens area (42) of the lens (4) is arranged in the mounting recess (112) of the outer skin (110).

12. Vehicle (100) according to any of claims 9 to 11, wherein the vehicle (100) is an aircraft (101).

## Revendications

1. Dispositif d'antenne (1) pour un véhicule (100), en particulier pour un aéronef (101), comprenant :
un agencement d'antenne (3) ; et
une lentille (4), qui comporte une première zone de lentille (41) en un premier matériau avec une première constante diélectrique et une deuxième zone de lentille (42) en un deuxième matériau avec une deuxième constante diélectrique, qui recouvre la première zone de lentille (41) ;
la première constante diélectrique étant dans une plage comprise entre 9 et 12 afin de focaliser un faisceau électromagnétique émis par l'antenne, et la deuxième constante diélectrique étant dans une plage comprise entre 2,1 et 3 ; et
la deuxième zone de lentille (42) s'étendant en forme d'arc dans une direction longitudinale (L1) et par rapport à une direction verticale (H1) dirigée transversalement à la direction longitudinale (L1), et la deuxième section de lentille (42) ayant, par rapport à la direction longitudinale (L1), une longueur (142) qui est supérieure à une largeur maximale (b42) de la deuxième section de lentille (42) par rapport à une direction transversale (C1) s'étendant transversalement à la direction longitudinale (L1) et à la direction verticale (H1).

2. Dispositif d'antenne (1) selon la revendication 1, dans lequel la largeur maximale (b42) de la deuxième section de lentille (42) est d'au moins 5 pour cent et d'au plus 50 pour cent de la longueur (142) de la deuxième section de lentille (42).

3. Dispositif d'antenne (1) selon la revendication 1 ou 2, dans lequel la première zone de lentille (41) et la deuxième zone de lentille (42) sont fabriquées d'une seule pièce.

4. Dispositif d'antenne (1) selon la revendication 1 ou 2, dans lequel la première zone de lentille (41) et la deuxième zone de lentille (42) sont collées l'une à l'autre.

5. Dispositif d'antenne (1) selon l'une quelconque des revendications précédentes, dans lequel l'agencement d'antenne (3) est intégré sur un dispositif à semi-conducteurs (30), lequel est fixé sur une plaque de support (2).

6. Dispositif d'antenne (1) selon la revendication 5, dans lequel un circuit émetteur-récepteur radar est intégré sur le dispositif à semi-conducteurs (30).

7. Dispositif d'antenne (1) selon l'une quelconque des revendications précédentes, comprenant en outre une interface de connexion électrique (5).

8. Dispositif d'antenne (1) selon l'une quelconque des revendications précédentes, dans lequel l'agencement d'antenne (3) est conçu pour fonctionner à des fréquences dans une plage comprise entre 60 GHz et 300 GHz.

9. Véhicule (100), comprenant :
une peau extérieure (110) avec une surface extérieure (110a), qui forme une surface d'écoulement ; et
un dispositif d'antenne (1) selon l'une quelconque des revendications précédentes, lequel est connecté à la peau extérieure (110), la deuxième zone de lentille (42) de la lentille (4) dépassant de la peau extérieure (110).

10. Véhicule (100) selon la revendication 9, dans lequel le dispositif d'antenne (1) est disposé sur la surface extérieure (110a).

11. Véhicule selon la revendication 9, dans lequel la peau extérieure (110) comporte un évidement de logement (112), lequel s'étend entre la surface extérieure (110a) et une surface intérieure (110b) située à l'opposé de celle-ci, la deuxième zone de lentille (42) de la lentille (4) étant disposée dans l'évidement de logement (112) de la peau extérieure (110).

12. Véhicule (100) selon l'une quelconque des revendications 9 à 11, dans lequel le véhicule (100) est un aéronef (101).
